# FASCICULE DE BREVET EUROPEEN

(11) **EP 3 605 543 B1**
(45) Date de publication et mention de la délivrance du brevet: **11.05.2022**
(21) Numéro de dépôt: 19187991.5
(22) Date de dépôt: 24.07.2019
(51) Int. Cl.: G11C 16/22, G06F 21/75, H01L 23/00

(54) **PROCÉDÉ DE DÉTECTION D'UNE ATTAQUE PAR UN FAISCEAU DE PARTICULES ÉLECTRIQUEMENT CHARGÉES SUR UN CIRCUIT INTÉGRÉ, ET CIRCUIT INTÉGRÉ CORRESPONDANT**
DETEKTIONSVERFAHREN EINES ANGRIFFS DURCH EINEN ELEKTRISCH GELADENEN TEILCHENSTRAHL AUF EINEN INTEGRIERTEN SCHALTKREIS, UND ENTSPRECHENDER INTEGRIERTER SCHALTKREIS
METHOD FOR DETECTING AN ATTACK BY A BUNDLE OF ELECTRICALLY CHARGED PARTICLES ON AN INTEGRATED CIRCUIT AND CORRESPONDING INTEGRATED CIRCUIT

(30) Priorité: 30.07.2018 FR 1857057
(43) Date de publication de la demande: 05.02.2020
(73) Titulaire: STMicroelectronics (Rousset) SAS, 13790 Rousset (FR)
(72) Inventeur: MARINET, Fabrice, 13790 Chateauneuf le rouge (FR); FORNARA, Pascal, 83910 Pourrières (FR)
(74) Mandataire: Casalonga

(56) Documents cités:
- US-A1- 2005 201 158
- US-A1- 2013 193 437
- US-A1- 2013 314 121
- US-A1- 2014 375 303
- US-A1- 2016 042 199

## Description

Des modes de réalisation et de mise en oeuvre de l'invention concernent les circuits intégrés, notamment des dispositifs de détection d'une éventuelle atteinte à l'intégrité du circuit intégré, par exemple par une attaque mettant en oeuvre une projection d'un faisceau de particules électriquement chargées. Le document US2016/042199 divulgue les protections contre les attaques par un faisceau de particules électriquement chargées en fournissant une couche métallique et des transistors. Le document US2014/375303 divulgue un dispositif de mesure de charge pour détecter les attaques par un faisceau de particules électriquement chargées sur un circuit semi-conducteur intégré.

En effet, notamment lors d'une ingénierie inversée d'un circuit intégré, des techniques projetant un faisceau de particules électriquement chargées sont typiquement mise en oeuvre. Les particules projetées peuvent être chargées positivement, telles que des ions positifs dans une sonde ionique focalisée (FIB pour « Focused Ion Beam » selon le terme usuel anglais) ou négativement, telles que des électrons dans le cadre d'une microscopie électronique à balayage (SEM pour « Scanning Electron Microscopy » selon le terme usuel anglais).

Les circuits intégrés de manière générale, et en particulier ceux équipés de mémoires contenant des informations sensibles, doivent être autant que possible protégés contre les attaques, notamment les attaques visant à découvrir des données stockées.

Les récupérations de données sont mises en oeuvre après une analyse de l'architecture du circuit intégré généralement au moyen d'un SEM, ou usinage micrométrique du circuit intégré afin d'y déposer des points de mesure, généralement obtenus par FIB. Ces différentes opérations sont effectuées sur le circuit hors-tension. Il est par conséquent délicat de détecter et de conserver la trace de telles techniques d'observation ou de modification du circuit intégré, par ce même circuit intégré, n'étant pas alimenté au moment de l'attaque.

Or, conserver une trace d'une mise en oeuvre d'ingénierie inversée, sur le circuit intégré hors-tension, permettrait de déclencher des dispositifs de contre-mesures avant une potentielle récupération de données, lorsque le circuit intégré est alimenté.

Il existe des solutions de détection basées sur un élément polarisateur invisible créant des variations de courant. Cela étant, ces solutions sont difficiles à réaliser et à mettre en oeuvre, sont souvent incompatibles avec les technologies avancées, et présentent des inconvénients tels que des fuites de courants, des instabilités relatives à la température, et des couplages capacitifs parasites, pouvant donner lieu à des résultats faux-positifs.

Or, il est préférable que les éléments déclencheurs de contre-mesures soient fiables et compatibles avec les technologies avancées.

A cet égard, selon un aspect il est proposé un procédé de détection d'une attaque d'un circuit intégré par un faisceau de particules électriquement chargées, comprenant :
- une réalisation dans le circuit intégré d'au moins un corps électriquement conducteur et d'au moins un transistor d'état ayant une grille flottante électriquement couplée avec respectivement ledit au moins un corps électriquement conducteur ;
- une configuration dudit au moins un transistor d'état de façon à lui conférer une tension de seuil initiale respective ; et
- une détection de ladite attaque par une détection d'une tension de seuil dudit au moins un transistor d'état différente de la tension de seuil initiale.

Ainsi, lors d'une attaque par un faisceau de particules électriquement chargées sur le circuit intégré, notamment dans le cadre d'une microscopie à balayage ou d'une sonde ionique focalisée, les charges vont être collectées par les corps électriquement conducteurs. Les charges des grilles flottantes des transistors d'état couplées aux corps électriquement conducteurs varient relativement à la quantité et à la polarisation des charges ainsi collectées, et les tensions de seuil des transistors d'état varient en conséquence. Par nature des transistors à grilles flottantes ayant une fonction de mémoire non-volatile, cette variation est mémorisée durablement et l'information est facilement accessible. En outre, la configuration des tensions de seuil initiales des transistors d'état permet une lecture fiable de l'état (ou régime) passant ou bloqué des transistors d'état, en fonction de la différence entre la tension de commande appliquée sur la grille de commande du transistor d'état et la tension de seuil initiale ainsi fixée.

En d'autres termes, il est proposé selon cet aspect de conserver la trace d'une attaque sur le circuit intégré par un faisceau de particules électriquement chargées, quelle que soit la polarisation desdites charges, de façon fiable et compatible avec tout type de technologie de mémoire non-volatile à grille flottante.

Ce ou ces transistors d'état peuvent faire partie de cellules-mémoire dédiées, et les différentes tensions de seuil initiales des transistors d'état peuvent correspondre à des états vierge, effacé ou programmé de ces transistors d'état et donc des cellules mémoire correspondantes.

Selon un mode de mise en oeuvre, le transistor d'état comprend une grille de commande et la détection de la tension de seuil différente de la tension de seuil initiale comprend une génération d'au moins une tension de commande sur la grille de commande différente de ladite tension de seuil initiale, et une détermination, pour chaque tension de commande, d'un état passant ou bloqué dudit au moins un transistor d'état. Par état passant ou bloqué, on entend l'état dans lequel la quantité de courant pouvant passer dans le transistor est respectivement supérieure ou inférieure à un courant de référence. Ainsi ladite détermination peut comprendre une comparaison d'un courant sur les bornes de conduction dudit au moins un transistor d'état par rapport à un courant de référence.

Selon un mode de mise en oeuvre, ladite réalisation comprend une réalisation d'un premier transistor d'état et d'un deuxième transistor d'état ; ladite configuration comprend un effacement du premier transistor d'état de façon à lui conférer une première tension de seuil initiale, et une programmation du deuxième transistor d'état de façon à lui conférer une deuxième tension de seuil initiale et ladite détection comprend une détection d'une modification de la tension de seuil de l'un des deux transistors d'état par rapport à sa tension de seuil initiale correspondante.

D'une part, les transistors d'état étant respectivement effacé et programmé lors de la configuration du circuit intégré, leurs tensions de seuil initiales respectives sont bien maitrisées, et la lecture en est fiabilisée.

D'autre part, une tentative de contournement de la détection, par exemple en portant le corps électriquement conducteur à un potentiel donné afin de reconfigurer les charges des grilles flottantes, tel qu'un potentiel simulant un état effacé ou programmé des transistors d'état, sera détecté à la lecture du transistor initialement configuré dans l'autre état.

En outre, une seule tension de commande permet la lecture des deux transistors, par exemple dans un mode de mise en oeuvre dans lequel ladite détection comprend une application sur chaque transistor d'état d'une tension de commande située entre la première tension de seuil initiale et la deuxième tension de seuil initiale.

Selon un autre mode de mise en oeuvre, ladite configuration comprend une mise à un potentiel de masse dudit au moins un corps par l'intermédiaire d'un élément de liaison pendant la réalisation du circuit intégré, puis un sectionnement de l'élément de liaison, de façon à conférer audit au moins un transistor d'état une troisième tension de seuil initiale correspondant à une configuration vierge de ce transistor d'état.

Ce mode de mise en oeuvre correspond à placer le transistor d'état dans un état rigoureusement vierge, c'est-à-dire ni programmé ni effacé, sans subir les altérations de couplages et de charges parasites typiquement subis lors des processus de fabrication de circuit intégré jusqu'à la découpe des plaquettes. Cela présente en outre l'avantage d'éviter des étapes d'effacement et de programmation lors de la configuration des transistors.

Par exemple, ladite détection peut comprendre une application d'une première tension de commande inférieure à la troisième tension de seuil initiale du transistor, et une deuxième tension de commande supérieure à la troisième tension de seuil initiale du transistor.

Selon un autre mode de mise en oeuvre, ladite configuration comprend un effacement ou une programmation dudit au moins un transistor d'état de façon à lui conférer soit une première tension de seuil initiale correspondant audit effacement, soit une deuxième tension de seuil initiale correspondant à ladite programmation.

Par exemple, ladite détection peut comprendre soit une application d'une première tension de commande inférieure à la première tension de seuil initiale et d'une deuxième tension de commande supérieure à la première tension de seuil initiale, soit une application d'une troisième tension de commande inférieure à la deuxième tension de seuil initiale et d'une quatrième tension de commande supérieure à la deuxième tension de seuil initiale.

En d'autres termes, cela permet de détecter une variation de la tension de seuil par rapport à la tension de seuil initiale résultant soit d'un faisceau de charges positive soit d'un faisceau de charges négatives.

Avantageusement, chaque tension de commande est en outre différente d'une tension de seuil d'un transistor d'état ayant une configuration vierge.

Cela permet de contrecarrer une tentative de contournement de la détection en portant le corps électriquement conducteur à un potentiel de masse afin de reconfigurer les charges dans les grilles flottantes.

Selon un mode de mise en oeuvre, ladite réalisation dans le circuit intégré d'au moins un corps électriquement conducteur comprend une réalisation d'au moins une plaque métallique située dans des niveaux d'interconnexion du circuit intégré.

Selon un mode de mise en oeuvre, ladite réalisation dans le circuit intégré d'au moins un corps électriquement conducteur comprend une réalisation d'au moins une tranchée remplie d'un matériau conducteur s'étendant verticalement en profondeur dans un substrat semiconducteur du circuit intégré.

Selon un autre aspect, il est proposé un circuit intégré comportant un dispositif de détection d'une attaque par un faisceau de particules électriquement chargées, comprenant :
- au moins un corps électriquement conducteur et au moins un transistor d'état ayant une grille flottante électriquement couplée avec respectivement ledit au moins un corps électriquement conducteur, ledit au moins transistor d'état étant configuré pour avoir une tension de seuil initiale respective ; et
- un moyen de détection configuré pour détecter ladite attaque par une détection d'une tension de seuil dudit au moins un transistor d'état différente de la tension de seuil initiale.

Selon un mode de réalisation, le transistor d'état comporte une grille de commande, et le moyen de détection comprend un circuit de lecture configuré pour générer au moins une tension de commande sur la grille de commande dudit transistor d'état différente de ladite tension de seuil initiale, et, pour chaque tension de commande, déterminer un état passant ou bloqué dudit au moins un transistor d'état.

Selon un mode de réalisation, ledit au moins un transistor d'état comprend un premier transistor d'état effacé pour avoir une première tension de seuil initiale et un deuxième transistor d'état programmé pour avoir une deuxième tension de seuil initiale, et ledit moyen de détection est configuré pour détecter une modification de la tension de seuil de l'un des deux transistors d'état par rapport à sa tension de seuil initiale correspondante.

Le circuit de lecture peut être configuré pour générer une tension de commande sur chaque transistor d'état, située entre la première tension de seuil initiale et la deuxième tension de seuil initiale.

Selon un autre mode de réalisation, ledit au moins un transistor d'état est configuré pour avoir une troisième tension de seuil initiale correspondant à une configuration vierge de ce transistor d'état.

Le circuit de lecture peut être configuré pour générer une première tension de commande inférieure à la troisième tension de seuil initiale et une deuxième tension de commande supérieure à la troisième tension de seuil initiale.

Selon un autre mode de réalisation, ledit au moins un transistor d'état est soit effacé pour avoir une première tension de seuil initiale, soit programmé pour avoir une deuxième tension de seuil initiale.

Le circuit de lecture peut être configuré pour générer au moins une tension de commande comprenant soit une première tension de commande inférieure à la première tension de seuil initiale et une deuxième tension de commande supérieure à la première tension de seuil initiale, soit une troisième tension de commande inférieure à la deuxième tension de seuil initiale et une quatrième tension de commande supérieure à la deuxième tension de seuil initiale.

Selon un mode de réalisation, le circuit de lecture est configuré pour générer chaque tension de commande en outre différente d'une tension de seuil d'un transistor d'état ayant une configuration vierge.

Selon un mode de réalisation, un élément capacitif est en outre couplé entre la grille flottante et la grille de commande dudit au moins un transistor d'état.

L'élément capacitif permet de compenser une modification du facteur de couplage entre la grille flottante et la grille de commande résultant du corps électriquement conducteur couplé à la grille flottante. Ainsi, les transistors d'état peuvent être commandés en lecture avec des tensions habituelles et maitrisées, améliorant la fiabilité du dispositif de détection.

Selon un mode de réalisation, ledit au moins un corps électriquement conducteur comprend au moins une plaque métallique située dans des niveaux d'interconnexion du circuit intégré.

Une plaque offre l'avantage de pouvoir collecter un nombre important de charges électriques.

Selon un mode de réalisation, ledit au moins un corps électriquement conducteur comprend au moins une tranchée remplie d'un matériau conducteur s'étendant verticalement en profondeur dans un substrat semiconducteur du circuit intégré.

D'autres avantages et caractéristiques de l'invention apparaîtront à l'examen de la description détaillée de modes de réalisation et de mise en oeuvre, nullement limitatifs, et des dessins annexés sur lesquels :

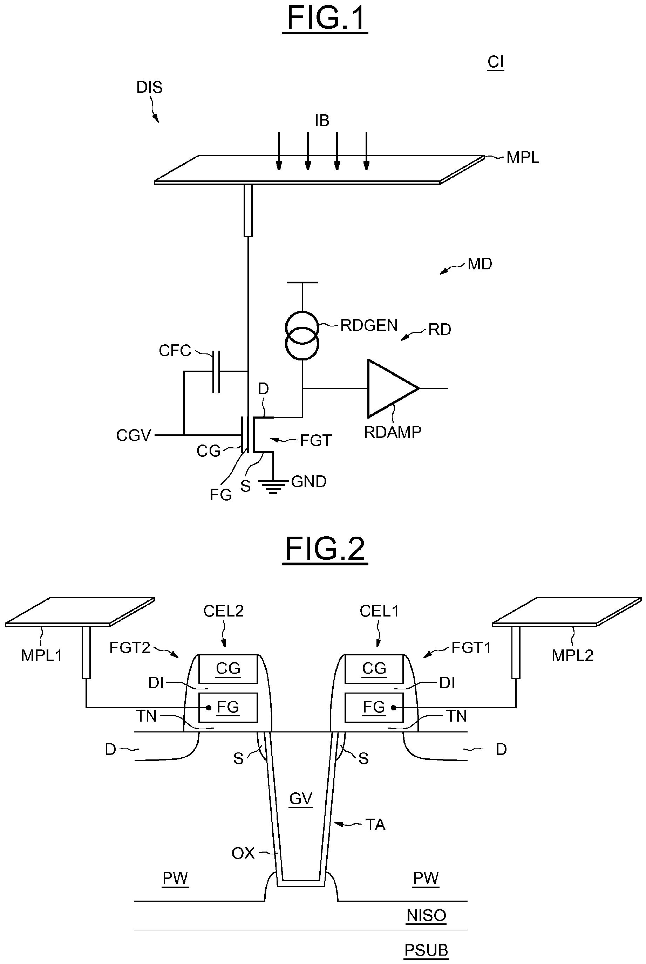

- les figures 1 à 8 illustrent schématiquement différents modes de mise en oeuvre et de réalisation de l'invention.

La figure 1 représente un exemple de mode de réalisation d'un circuit intégré CI comportant un dispositif DIS de détection d'une attaque par un faisceau IB de particules électriquement chargées.

Le dispositif DIS comprend un corps électriquement conducteur MPL, dans cet exemple une plaque métallique. Par exemple, la plaque métallique MPL est réalisée dans les niveaux d'interconnexions du circuit intégré CI, généralement désignés par l'acronyme BEOL du terme anglais usuel « Back End Of Line ».

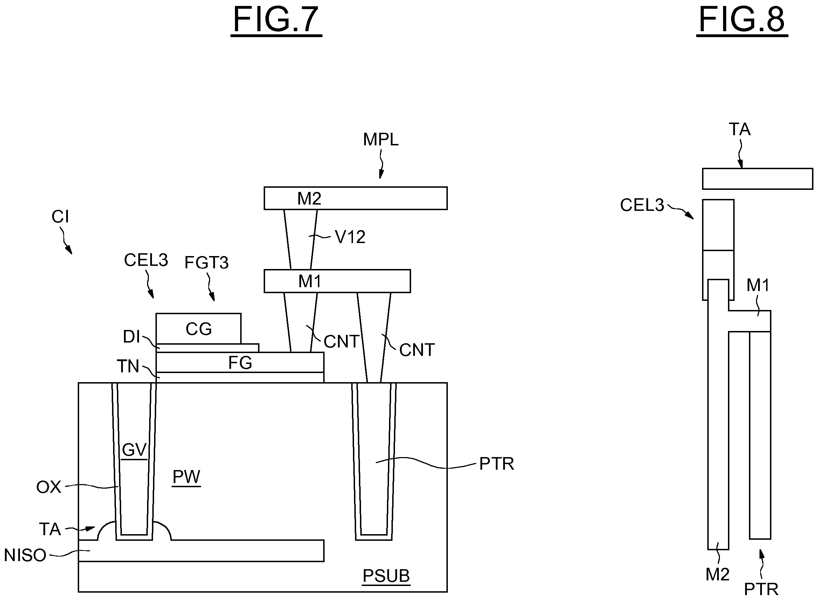

Le corps électriquement conducteur MPL peut aussi comprendre, en combinaison ou en alternative, une tranchée remplie d'un matériau conducteur s'étendant verticalement en profondeur dans un substrat semiconducteur du circuit intégré, par exemple tel que décrit ci-après en relation avec les figures 7 et 8.

Le dispositif DIS comprend au moins un transistor d'état FGT ayant une grille de commande CG et une grille flottante FG, ainsi qu'une région de source S et une région de drain D. Un seul transistor d'état FGT a été représenté dans un but de simplification. Le transistor d'état FGT est par exemple de la même conception qu'un transistor d'état appartenant à une partie de mémoire non-volatile du circuit intégré CI. Le transistor d'état FGT peut même appartenir à une cellule-mémoire de la même conception que dans une mémoire non-volatile, c'est-à-dire comportant par exemple un transistor d'accès. Les termes « état programmé » ou « état effacé » du transistor d'état correspondent aux états d'écritures respectifs d'une cellule-mémoire, dans le vocabulaire du domaine des mémoires non-volatiles.

Cela étant, la grille flottante FG du transistor d'état FGT du dispositif de détection DIS est couplée au corps électriquement conducteur MPL.

Le transistor d'état FGT est configuré pour avoir une tension de seuil initiale. La tension de seuil est la tension de commande CGV, entre la grille de commande CG et la source S du transistor FGT, à laquelle se produit une transition d'un régime bloqué à un régime passant. La tension de seuil à laquelle est initialement configuré le transistor d'état FGT est qualifiée « initiale » car, comme il apparaîtra dans la suite, la tension de seuil effective du transistor d'état FGT peut être amenée à varier par rapport à cette tension de seuil initiale.

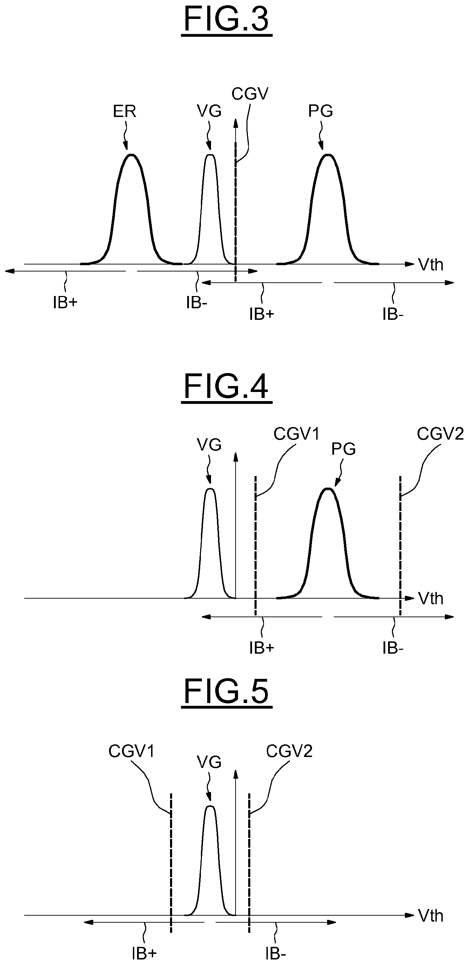

Comme détaillé ci-après, notamment en relation avec les figures 3, 4 et 5, le transistor d'état FGT peut être dans trois états différents, par exemple dans un premier état effacé dans lequel la grille flottante est chargée positivement, dans un deuxième état programmé dans lequel la grille flottante est chargée négativement, et dans un troisième état dit état vierge, dans lequel la grille flottante est à un potentiel de masse.

Chaque état du transistor d'état FGT, effacé, programmé, ou vierge, caractérise une valeur respective de la tension de seuil initiale du transistor d'état FGT.

Or, dans le dispositif de détection DIS, une attaque par un faisceau IB de particules électriquement chargées sur la plaque métallique MPL va entrainer une accumulation de charges dans cette plaque, et donc une modification de la charge des grilles flottantes qui y sont couplées.

Cette modification de charge, positive ou négative, va entrainer une variation correspondante de la tension de seuil effective du transistor d'état FGT et donc potentiellement modifier le régime bloqué ou passant pour une tension de commande CGV donnée.

Le terme « régime » (bloqué ou passant) peut être indifféremment substitué par le terme « état » (bloqué ou passant). Bien entendu, l'état bloqué ou passant pour une tension de commande donnée est à distinguer de l'état effacé ou programmé du transistor.

Le dispositif de détection DIS comporte ainsi un moyen de détection MD destiné à détecter une telle variation, représentative d'une attaque par un faisceau de particules chargées dans le circuit intégré CI.

Le moyen de détection MD comporte un circuit de lecture RD configuré pour générer au moins une tension de commande CGV sur la grille de commande CG du transistor d'état FGT, et pour lire un régime passant ou bloqué du transistor d'état FGT commandé par cette tension de commande CGV. A la tension de commande CGV, le transistor d'état FGT peut être en régime linéaire, et la détermination de l'état passant ou bloqué du transistor FGT correspond à une comparaison de la quantité de courant écoulée par le transistor d'état FGT par rapport à un courant de référence. Par abus de langage, on considérera qu'une quantité de courant écoulée par le transistor d'état FGT inférieure au courant de référence est représentative d'un régime bloqué, et une quantité de courant écoulée par le transistor d'état FGT supérieure au courant de référence est représentative d'un régime passant.

La tension de commande CGV est générée classiquement au moyen d'un circuit générateur qui n'est pas représenté. Dans cet exemple, la lecture du régime dans lequel se trouve le transistor FGT à la tension de commande CGV est réalisé au moyen d'un montage simple comprenant un générateur de courant de lecture RDGEN et un amplificateur de lecture RDAMP. Le générateur de courant de lecture RDGEN est configuré pour précharger un noeud d'entrée de l'amplificateur de lecture RDAMP, également couplé au drain D du transistor d'état FGT. La source S du transistor d'état FGT est couplée à une borne de masse GND.

Ainsi, pour une tension de commande CGV donnée, si la tension de commande CGV est supérieure à la tension de seuil effective du transistor FGT, le transistor FGT est en régime passant. En régime passant, une quantité de courant pouvant être supérieure au courant de lecture peut circuler par les bornes de conduction du transistor FGT vers la masse GND et la tension en entrée de l'amplificateur de lecture RDAMP chute. Si la tension de commande CGV est inférieure à la tension de seuil effective du transistor FGT, le transistor FGT est en régime bloqué. En régime bloqué, la tension en entrée de l'amplificateur de lecture RDAMP ne varie pas, ou ne varie pas suffisamment pour faire commuter l'amplificateur de lecture RDAMP. La sortie de l'amplificateur de lecture RDAMP délivre ainsi un signal représentatif du régime du transistor d'état FGT à une tension de commande donnée CGV. Ce signal sortant est exploitable pour un traitement en aval, par exemple une comparaison du signal sortant avec une valeur attendue de ce signal dans une configuration donnée.

En d'autres termes, le circuit de lecture RD permet d'évaluer la valeur de la tension de seuil effective du transistor d'état FGT. Ainsi, s'il est évalué que la tension de seuil effective du transistor d'état FGT est différente de la tension de seuil initiale respective, alors la charge de la grille flottante FG a varié, et cela est représentatif d'une attaque par un faisceau de particules électriquement chargées dans le circuit intégré CI.

La figure 2 représente un exemple de réalisation d'une paire de cellules-mémoires CEL1, CEL2 de technologie avancée, formées sur un substrat semiconducteur PSUB.

Chaque cellule-mémoires comporte un transistor d'état FGT1, FGT2, partageant un transistor d'accès TA commun.

Les transistors d'état FGT1, FGT2 comportent chacun une grille de commande CG surmontant une grille flottante FG, mutuellement séparées par une couche diélectrique DI du type « ONO » : Oxyde-Nitrure-Oxyde de silicium. Les grilles de commande CG et les grilles flottantes FG sont typiquement formées en silicium polycristallin électriquement conducteur. Un oxyde tunnel TN, de faible épaisseur, sépare la grille flottante FG d'une région de canal située entre les régions de source S et de drains D de chaque transistor FGT1, FGT2, dans un caisson PW.

Le transistor d'accès TA est du type transistor enterré et comporte une grille verticale GV traversant le caisson PW en profondeur jusqu'à une couche semiconductrice enterrée NISO. La grille verticale GV, également en silicium polycristallin, est enveloppée d'un oxyde de grille OX. La couche enterré NISO fait office de région de source du transistor d'accès TA, et les deux régions des sources S des deux transistors d'état FGT1, FGT2, de part et d'autre de la grille verticale GV, font office de régions de drains du transistor d'accès TA.

La grille flottante FG de chacun des transistors d'état FGT1, FGT2 est couplée à un corps électriquement conducteur respectif MPL1, MPL2 et fait partie du dispositif DIS de détection d'une attaque par un faisceau de particules électriquement chargées IB. Le transistor d'accès TA peut également appartenir au dispositif de détection DIS, et être commandé de façon adéquate par le circuit de lecture RD.

Selon un mode de réalisation, les deux transistors d'état appartiennent au dispositif de détection DIS, le premier transistor d'état FGT1 est effacé pour avoir une première tension de seuil initiale, et le deuxième transistor d'état FGT2 est programmé pour avoir une deuxième tension de seuil initiale. A cet égard, il est fait référence à la figure 3.

Les figures 3, 4 et 5 représentent des lois normales de distribution des valeurs des tensions de seuil Vth de transistors dans des états respectivement effacés ER, programmés PG, et vierge VG. Ainsi, on convient d'entendre par « tension de seuil initiale », relativement à un état donné, toute valeur de tension de seuil Vth raisonnablement comprise dans la distribution respective (par exemple les valeurs de densités supérieures à 1% de la densité maximale).

La figure 3 représente ainsi la valeur seuil initiale ER d'un premier transistor d'état FGT1 effacé, et la valeur seuil initiale PG d'un deuxième transistor d'état FGT2 programmé. Par ailleurs, la tension de seuil initiale VG d'un transistor d'état dont la grille flottante est fixée à un potentiel de masse est également représentée.

La tension de commande CGV générée par le circuit de lecture RD lors d'une lecture d'un régime passant ou bloqué de chacun des deux transistors d'état FGT1, FGT2, est située entre la première tension de seuil initiale ER et la deuxième tension de seuil initiale PG.

Si le circuit intégré n'a pas subi une attaque par un faisceau de particules électriquement chargées, alors les tensions de seuil effectives des transistors d'état FGT1, FGT2 sont égales aux tensions de seuil initiales ER, PG.

Ainsi, lors de la lecture, le premier transistor d'état FGT1 effacé est dans un régime passant à la tension de commande CGV, et le deuxième transistor d'état FGT2 programmé est dans un régime bloqué à la même tension de commande CGV.

Or, un faisceau de particules de charge positive IB+ projeté sur les corps conducteurs MPL1, MPL2 a pour effet de réduire les tensions de seuil effectives Vth des transistors d'état FGT1, FGT2, qui seraient ainsi représentées par les courbes de la figure 3 décalées vers la gauche.

Par conséquent, lors d'une lecture subséquente, le premier transistor d'état FGT1 est toujours dans un régime passant à la tension de commande CGV, tandis que le deuxième transistor d'état FGT2 programmé est désormais dans un régime passant à la même tension de commande CGV. Etant attendu un régime bloqué à cette tension de commande CGV pour le deuxième transistor d'état FGT2 programmé, l'attaque par un faisceau de particules de charge positive est détectée.

De façon analogue, un faisceau de particules de charge négative IB- projeté sur le corps conducteur MPL1, MPL2 a pour effet d'augmenter les tensions de seuil effectives Vth des transistors d'état FGT1, FGT2, qui seraient représentées par les courbes de la figure 3 décalées vers la droite.

Lors d'une lecture subséquente, le premier transistor d'état FGT1 est passé dans un régime bloqué à la tension de commande CGV, tandis que le deuxième transistor d'état FGT2 programmé est resté dans un régime bloqué à la même tension de commande CGV. Etant attendu un régime passant à cette tension de commande CGV pour le premier transistor d'état FGT1 effacé, l'attaque par un faisceau de particules de charge négative est détectée.

Par ailleurs on remarquera que la tension de commande CGV est aussi différente d'une tension de seuil VG d'un transistor d'état dont la grille flottante est fixée à un potentiel de masse. Ainsi, si les grilles flottantes des transistors FGT1, FGT2 sont reconfigurées pour avoir un état vierge, la reconfiguration sera détectée de façon analogue. Une telle reconfiguration pourrait être mise en oeuvre dans l'optique d'effacer les traces de la projection du faisceau de particules électriquement chargées, par exemple en appliquant un potentiel de masse sur la plaque métallique. En outre, si les transistors FGT1, FGT2 sont reconfigurées pour avoir des états effacés ou programmés, via l'application de potentiels adéquats sur les corps électriquement conducteurs MPL1, MPL2, la reconfiguration sera détectée de façon analogue, par le changement d'état de l'un des deux transistors FGT1, FGT2.

La figure 4 représente un mode de réalisation dans lequel un transistor d'état FGT est programmé pour avoir une deuxième tension de seuil initiale PG.

Le transistor d'état FGT aurait tout aussi bien pu être effacé pour avoir une deuxième tension de seuil initiale (ER).

En outre, on peut également envisager dans ce mode de réalisation une pluralité de transistors à grilles flottantes FGT individuellement configurés dans des états arbitrairement effacés ou programmés.

Ici, une première tension de commande CGV1, inférieure à la tension de seuil initiale PG du transistor FGT, est générée pour une première lecture du régime passant ou bloqué du transistor d'état FGT.

Une deuxième tension de commande CGV2, supérieure à la tension de seuil initiale PG du transistor FGT, est générée pour une deuxième lecture du régime passant ou bloqué du transistor d'état FGT.

Dans cet exemple, le transistor d'état FGT est configuré pour être bloqué lors de la première lecture à la première tension de commande CGV1, et pour être passant lors de la deuxième lecture à la deuxième tension de commande CGV2.

Une attaque par un faisceau de particules de charge positive IB+ ou respectivement de charge négative IB-, seront respectivement détectées lors de la première lecture (régime passant à la place du régime bloqué attendu) et lors de la deuxième lecture (régime bloqué à la place du régime passant attendu).

Les tensions de commandes CGV1, CGV2 sont en outre différentes d'une tension de seuil initiale VG d'un transistor d'état dont la grille flottante est fixée à un potentiel de masse, de façon à pouvoir détecter une reconfiguration à un état vierge.

La figure 5 représente un mode de mise en oeuvre dans lequel un transistor d'état FGT est configuré pour avoir une troisième tension de seuil initiale VG, correspondant à un état vierge.

La détection d'une attaque par un faisceau de particules de charge positive IB+ ou de charge négative IB- est mise en oeuvre de façon analogue au mode de mise en oeuvre décrit ci-avant en relation avec la figure 4, c'est-à-dire au moyen d'une première lecture à une première tension de commande CGV1 inférieure à la troisième tension de seuil initiale VG, et d'une deuxième lecture à une deuxième tension de commande CGV2 supérieure à la troisième tension de seuil initiale VG.

Un régime passant à la place du régime bloqué attendu lors de la première lecture, et un régime bloqué à la place du régime passant attendu lors de la deuxième lecture permettront de détecter respectivement une attaque par un faisceau de particules de charges positives IB+ ou de charges négatives IB-, ou aussi une tentative de reconfiguration du transistor d'état FGT dans un état effacé ou programmé.

Ce mode de mise en oeuvre nécessite préalablement une configuration du transistor d'état FGT comprenant une mise à un potentiel de masse de la grille flottante FG. La mise à un potentiel de masse de la grille flottante est faite par l'intermédiaire d'un élément de liaison LI et pendant la fabrication du circuit intégré CI. En fin de chaine de fabrication, par exemple au moment d'une découpe des circuits intégrés CI d'une plaquette de silicium, l'élément de liaison LI est sectionné. Cela permet de configurer le transistor d'état FGT pour avoir une troisième tension de seuil initiale VG, correspondant ici à une tension de seuil de transistor d'état vierge, malgré les interactions électriques parasites des autres étapes de fabrication d'un circuit intégré CI, pouvant accumuler des charges dans la grille flottante FG.

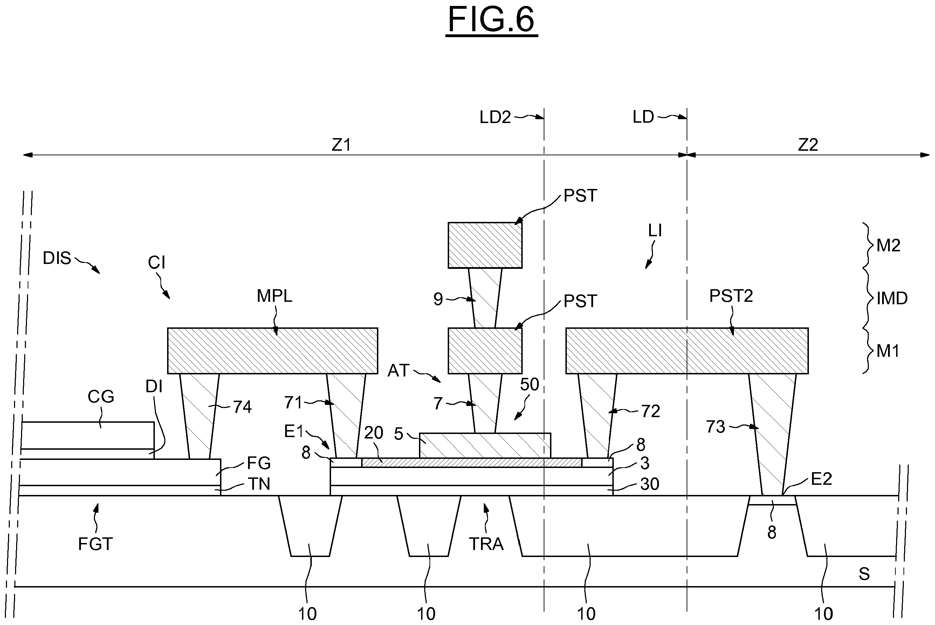

La figure 6 représente un exemple de moyen de mise en oeuvre d'une telle configuration d'un transistor d'état FGT pour avoir une troisième tension de seuil initiale VG correspondant à une tension de seuil de transistor d'état vierge.

Le circuit intégré CI est situé dans une première zone Z1 d'une plaquette semiconductrice (« wafer » en anglais), délimitée d'une deuxième zone Z2 de la plaquette par un chemin de découpe LD.

La plaquette est destinée à être découpée mécaniquement le long du chemin de découpe LD, de façon à individualiser les circuits intégrés CI réalisés, par exemple pour être conditionnés et encapsulés dans des boitiers fonctionnels.

Le substrat S de la plaquette et du circuit intégré comprend des régions d'isolation latérales 10, par exemple des tranchées d'isolation peu profondes (STI pour « Shallow Trench Isolation » en anglais).

Le circuit CI comprend sur sa périphérie extérieure un anneau d'étanchéité AT. Cette structure est avantageuse car elle permet d'assurer l'étanchéité et donc de protéger le circuit intégré CI contre la propagation éventuelle d'écailles et d'éclats, lors de la découpe de la plaquette permettant d'individualiser les circuits intégrés.

Bien entendu, le circuit intégré CI peut comprendre sur sa périphérie plusieurs anneaux d'étanchéité AT disposés côte à côte pour renforcer l'étanchéité et mieux protéger le circuit intégré CI.

L'anneau d'étanchéité AT est réalisé dans les premiers niveaux de d'une partie d'interconnexion « BEOL » du circuit intégré CI. La partie d'interconnexion comporte des niveaux de métallisation Ml, M2, électriquement séparés par des couches respectives de diélectriques inter-métaux IMD. Les couches de diélectriques inter-métaux IMD peuvent être traversées par des vias 9 conducteurs afin de relier électriquement des pistes métalliques PST appartenant à différents niveaux de métallisation. Sous le premier niveau de métallisation Ml, des contacts 7 permettent de connecter les éléments formés dans et sur le substrat S.

L'anneau d'étanchéité AT comporte une superposition de pistes métalliques PST et de vias 9, au-dessus d'un premier contact 7, s'étendant tous longitudinalement de façon à former une structure assimilable à un mur.

Le contact 7 de l'anneau d'étanchéité AT repose sur un premier barreau de silicium polycristallin 5, reposant sur une première couche diélectrique 20.

Un deuxième barreau de silicium polycristallin 3 s'étend latéralement de part et d'autre de l'anneau d'étanchéité AT, sous le premier barreau 5 et la première couche diélectrique 20, et est séparé du substrat S par une deuxième couche diélectrique 30.

Ainsi le deuxième barreau de silicium polycristallin 3 permet d'assurer une liaison électrique entre l'intérieur et l'extérieur de l'anneau d'étanchéité AT, par exemple au moyen de prises de contacts 8 à ses extrémités. Les prises de contacts 8 sont généralement réalisées par une siliciuration et permettent d'assurer des couplages peu résistifs entre un métal et le silicium.

La structure TRA traversant ainsi l'anneau d'étanchéité AT constitue une partie d'un élément de liaison électriquement conducteur LI qui s'étend à l'extérieur du circuit intégré CI, au-delà de la ligne de découpe LD.

L'élément de liaison électriquement conducteur LI s'étend entre un premier endroit E1 à l'intérieur du circuit intégré CI, et un deuxième endroit E2 situé à l'extérieur du circuit intégré CI, ici un endroit du substrat situé en zone Z2 de la plaquette au-delà de la ligne de découpe LD.

Le premier endroit E1 est le noeud sur lequel le corps électriquement conducteur MPL est couplé avec le deuxième barreau de silicium 3 par un contact 71 sur l'extrémité siliciurée 8 intérieure dudit barreau 3. Dans cet exemple, le corps électriquement conducteur comprend une plaque métallique MPL dans le premier niveau de métallisation Ml.

La plaque métallique MPL est électriquement couplée à la grille flottante FG d'au moins un transistor d'état FGT. A cet égard, dans cette représentation, la grille flottante FG déborde en largeur, par rapport à la grille de commande CG. Sur la partie ainsi découverte de la grille flottante FG, un contact 74 relie électriquement la grille flottante FG à la plaque métallique MPL.

Par exemple la grille flottante FG et la grille de commande CG peuvent former des grilles communes à plusieurs réalisations de transistors d'état FGT voisins, indépendamment sélectionnables par leurs régions de source et de drain respectives (non représentées car situées dans des plans parallèles à celui de la représentation de la figure 6).

Ainsi, la plaque métallique MPL et les grilles flottantes FG des transistors d'état FGT sont électriquement reliées au deuxième endroit E2, par l'élément de liaison LI.

L'élément de liaison LI comprend également une partie chevauchante qui traverse la ligne de découpe LD. La partie chevauchante comprend une piste métallique PST2 située par exemple dans le premier niveau de métallisation Ml, et deux contacts 72, 73 connectant respectivement le deuxième barreau de silicium polycristallin 3 et le deuxième endroit E2.

Le deuxième endroit E2 est situé ici au niveau d'une prise de contact dans le substrat S à l'extérieure du circuit intégré CI, ne subissant pas les interactions électriques parasites de la fabrication du circuit intégré CI.

Le substrat S est maintenu à la masse pendant la fabrication, et ainsi, les grilles flottantes FG et le corps électriquement conducteur MPL sont également maintenus à un potentiel de masse pendant la fabrication du circuit intégré CI.

La partie chevauchante PST2 de l'élément de liaison LI sera ensuite sectionnée lors de la découpe, laissant flottants les potentiels du corps électriquement conducteur MPL et des grilles flottantes FG, à un potentiel initial de masse. Par conséquent les transistors d'états FGT sont configurés, dans ce mode de mise en oeuvre, dans un état rigoureusement vierge pour avoir une troisième tension de seuil initiale VG.

Selon une alternative, l'élément de liaison LI peut être sectionné lors de la découpe suivant un autre chemin de découpe LD2. L'autre chemin de découpe LD2 est situé au niveau de la superposition du premier barreau de silicium polycristallin 3 et du deuxième barreau de silicium polycristallin 5, entre l'anneau d'étanchéité AT et la prise de contact 8 du côté extérieur au circuit intégré CI. Cette alternative peut permettre de complexifier un accès au dispositif DIS, un contact étant plus difficile à réaliser sur les barreaux de polysilicium 3 ou 5 que sur la piste métallique PST2.

L'exemple d'élément de liaison LI a été décrit selon un mode de réalisation avantageux, mais bien entendu, d'autres configurations de l'élément de liaison LI sont possibles, par exemple sans nécessairement passer sous l'anneau d'étanchéité.

Les figures 7 et 8 illustrent un exemple de réalisation du circuit intégré CI comportant un dispositif DIS de détection d'une attaque par un faisceau de particules électriquement chargées.

La figure 7 et la figure 8 sont respectivement une vue en coupe et une vue du dessus d'une cellule-mémoire CEL3, de technologie avancée de même conception que les cellules-mémoires CEL1, CEL2 décrites précédemment en relation avec la figure 2 et/ou la figure 6.

Les éléments communs supportent les mêmes références et ne sont pas à nouveau détaillées ici.

Ainsi, la cellule-mémoire CEL3 comporte notamment un transistor d'état FGT3 ayant une grille flottante FG et une grille de commande CG, et un transistor d'accès TA du type transistor enterré à grille verticale GV.

La grille flottante FG du transistor d'état FGT3 est couplée à un corps électriquement conducteur MPL du dispositif DIS de détection d'une attaque utilisant un faisceau de particule chargée IB (figure 1).

Dans ce mode de réalisation, le corps électriquement conducteur MPL comprend au moins une tranchée remplie d'un matériau conducteur PTR s'étendant verticalement en profondeur dans un substrat semiconducteur PSUB du circuit intégré CI.

Par exemple, dans le procédé de fabrication du circuit intégré CI, la réalisation de la tranchée remplie d'un matériau conducteur PTR est mise en oeuvre simultanément avec la réalisation du transistor d'accès TA.

Cela étant, la couche semiconductrice enterrée NISO faisant office de région de source des transistors d'accès TA n'est pas utile à la fonction du corps électriquement conducteur MPL formé par la tranchée remplie d'un matériau conducteur PTR.

Ainsi la couche semiconductrice enterrée NISO peut être présente ou ne pas être présente au niveau du fond de la tranchée remplie d'un matériau conducteur PTR, par exemple en fonction du lieu où elle se situe et s'il est prévu ou non une telle couche semiconductrice enterrée NISO en ce lieu.

Bien entendu le corps électriquement conducteur MPL peut aussi comprendre en combinaison des plaques métalliques MPL1, MPL2 telles que décrites précédemment en relation avec notamment les figures 1, 2, et 6.

Dans la représentation des figures 7 et 8, la tranchée remplie d'un matériau conducteur PTR est couplée électriquement à la grille flottante FG du transistor d'état FGT3 par l'intermédiaire de pistes métalliques M1, M2, de contacts CNT et de via V12 des niveaux d'interconnexions.

Les pistes métalliques Ml, M2 des niveaux d'interconnexion peuvent en même temps former les plaques métalliques MPL1, MPL2 destinées à être chargées par le faisceau de particules électriquement chargées.

Avantageusement, la tranchée remplie d'un matériau conducteur PTR est dessinée de façon à parcourir une surface maximisée du substrat (vu du dessus, la profondeur dans le substrat étant fixée par le procédé de fabrication), en fonction des possibilités permises par les autres éléments du circuit intégré formés dans et sur le même substrat.

Par exemple la tranchée remplie d'un matériau conducteur PTR peut être située à distance du transistor d'état FGT3 et être couplée à sa grille flottante par un trajet dans les niveaux d'interconnexions.

Ainsi, en cas de gravure utilisant un faisceau de particules chargées, telle qu'une gravure de type FIB (pour « Focalised Ion Beam » en anglais), mise en oeuvre depuis l'arrière du substrat PSUB et dirigée vers la face avant du substrat (sur laquelle est réalisé notamment le transistor d'état FGT3), pourra rencontrer la tranchée remplie d'un matériau conducteur PTR du dispositif de détection DIS au moment où le niveau du fond du caisson PW est atteint par la gravure.

Ainsi, les charges du faisceau de particules chargées vont polariser le corps électriquement conducteur et modifier la charge de la grille flottante du transistor d'état FGT3, de façon analogue à la gravure passant par les niveaux d'interconnexion et chargeant les plaques métalliques décrite précédemment en relation avec les figures 1 et 2.

Une variation de la tension de seuil du transistor d'état FGT3 pourra ainsi être mesurée selon une technique telle que décrite précédemment en relation avec les figures 3 à 6.

En résumé, il a été décrit des exemples de modes de mise en oeuvre et de réalisation permettant de conserver la trace d'une attaque du circuit intégré potentiellement hors-tension, par un faisceau de particules électriquement chargées, quelle que soit la polarisation desdites charges, de façon fiable et compatible avec tout type de technologie. En outre, les modes de mise en oeuvre et de réalisation décrits sont résistants à des tentatives de contournement de la détection, notamment des tentatives de reconfiguration les charges dans les grilles flottantes.

## Revendications

1. Procédé de détection d'une attaque d'un circuit intégré (CI) par un faisceau de particules électriquement chargées (IB), comprenant :
- une réalisation dans le circuit intégré d'au moins un corps électriquement conducteur (MPL) et d'au moins un transistor d'état ayant une grille flottante (FG) électriquement couplée avec respectivement ledit au moins un corps électriquement conducteur (MPL) ;
- une configuration dudit au moins un transistor d'état (FGT) de façon à lui conférer une tension de seuil initiale respective ; et
- une détection de ladite attaque par une détection d'une tension de seuil dudit au moins un transistor d'état (FGT) différente de la tension de seuil initiale.

2. Procédé selon la revendication 1, dans lequel le transistor d'état (FGT) comprend une grille de commande (CG) et la détection de la tension de seuil différente de la tension de seuil initiale comprend une génération d'au moins une tension de commande (CGV) sur la grille de commande (CG) différente de ladite tension de seuil initiale, et une détermination (RD), pour chaque tension de commande (CGV), d'un état passant ou bloqué dudit au moins un transistor d'état (FGT).

3. Procédé selon l'une des revendications 1 ou 2, dans lequel ladite réalisation comprend une réalisation d'un premier transistor d'état (FGT1) et d'un deuxième transistor d'état (FGT2) ; ladite configuration comprend un effacement du premier transistor d'état (FGT1) de façon à lui conférer une première tension de seuil initiale (ER), et une programmation du deuxième transistor d'état (FGT2) de façon à lui conférer une deuxième tension de seuil initiale (PG) et ladite détection comprend une détection d'une modification de la tension de seuil de l'un des deux transistors d'état par rapport à sa tension de seuil initiale correspondante.

4. Procédé selon les revendications 2 et 3, dans lequel ladite détection comprend une application sur chaque transistor d'état d'une tension de commande (CGV) située entre la première tension de seuil initiale (ER) et la deuxième tension de seuil initiale (PG).

5. Procédé selon l'une des revendications 1 ou 2, dans lequel ladite configuration comprend une mise à un potentiel de masse dudit au moins un corps (MPL) par l'intermédiaire d'un élément de liaison (LI) pendant la réalisation du circuit intégré (CI), puis un sectionnement de l'élément de liaison (LI), de façon à conférer audit au moins un transistor d'état (FGT) une troisième tension de seuil initiale (VG) correspondant à une configuration vierge de ce transistor d'état.

6. Procédé selon la revendication 5 prise en combinaison avec la revendication 2, dans lequel ladite détection comprend une application d'une première tension de commande (CGV1) inférieure à la troisième tension de seuil initiale (VG) du transistor, et une deuxième tension de commande (CGV2) supérieure à la troisième tension de seuil initiale (VG) du transistor.

7. Procédé selon l'une des revendications 1 ou 2, dans lequel ladite configuration comprend un effacement ou une programmation dudit au moins un transistor d'état (FGT) de façon à lui conférer soit une première tension de seuil initiale (ER) correspondant audit effacement, soit une deuxième tension de seuil initiale (PG) correspondant à ladite programmation.

8. Procédé selon la revendication 7 prise en combinaison avec la revendication 2, dans lequel ladite détection comprend soit une application d'une première tension de commande (CGV1) inférieure à la première tension de seuil initiale (ER) et d'une deuxième tension de commande (CGV2) supérieure à la première tension de seuil initiale (PG), soit une application d'une troisième tension de commande (CGV1) inférieure à la deuxième tension de seuil initiale (ER) et d'une quatrième tension de commande (CGV2) supérieure à la deuxième tension de seuil initiale (PG).

9. Procédé selon l'une des revendications précédentes prise en combinaison avec la revendication 2, dans lequel chaque tension de commande (CGV, CGV1, CGV2) est en outre différente d'une tension de seuil (VG) d'un transistor d'état ayant une configuration vierge.

10. Procédé selon l'une des revendications 1 à 9, dans lequel ladite réalisation dans le circuit intégré d'au moins un corps électriquement conducteur (MPL) comprend une réalisation d'au moins une plaque métallique (MPL1, MPL2) située dans des niveaux d'interconnexion du circuit intégré (CI).

11. Procédé selon l'une des revendications 1 à 10, dans lequel ladite réalisation dans le circuit intégré d'au moins un corps électriquement conducteur (MPL) comprend une réalisation d'au moins une tranchée remplie d'un matériau conducteur (PTR) s'étendant verticalement en profondeur dans un substrat semiconducteur (PSUB) du circuit intégré (CI).

12. Circuit intégré comportant un dispositif (DIS) de détection d'une attaque par un faisceau de particules électriquement chargées (IB), comprenant :
- au moins un corps électriquement conducteur (MPL) et au moins un transistor d'état (FGT) ayant une grille flottante (FG) électriquement couplée avec respectivement ledit au moins un corps électriquement conducteur (MPL), ledit au moins transistor d'état (FGT) étant configuré pour avoir une tension de seuil initiale respective ; et
- un moyen de détection (MD) configuré pour détecter ladite attaque par une détection d'une tension de seuil dudit au moins un transistor d'état (FGT) différente de la tension de seuil initiale.

13. Circuit intégré selon la revendication 12, dans lequel le transistor d'état (FGT) comporte une grille de commande (CG), et le moyen de détection (MD) comprend un un circuit de lecture (RD) configuré pour générer au moins une tension de commande (CGV) sur la grille de commande (CG) dudit transistor d'état (FGT) différente de ladite tension de seuil initiale, et, pour chaque tension de commande (CGV), déterminer un état passant ou bloqué dudit au moins un transistor d'état (FGT).

14. Circuit intégré selon l'une des revendications 12 ou 13, dans lequel ledit au moins un transistor d'état comprend un premier transistor d'état (FGT1) effacé pour avoir une première tension de seuil initiale (ER) et un deuxième transistor d'état programmé (FGT2) pour avoir une deuxième tension de seuil initiale (PG), et ledit moyen de détection (MD) est configuré pour détecter une modification de la tension de seuil de l'un des deux transistors d'état (FGT1, FGT2) par rapport à sa tension de seuil initiale (ER, PG) correspondante.

15. Circuit intégré selon les revendications 13 et 14, dans lequel le circuit de lecture (RD) est configuré pour générer une tension de commande (CGV) sur chaque transistor d'état (FGT1, FGT2), située entre la première tension de seuil initiale (ER) et la deuxième tension de seuil initiale (PG).

16. Circuit intégré selon l'une des revendications 12 ou 13, dans lequel ledit au moins un transistor d'état (FGT) est configuré pour avoir une troisième tension de seuil initiale (VG) correspondant à une configuration vierge de ce transistor d'état.

17. Circuit intégré selon la revendication 16 prise en combinaison avec la revendication 13, dans lequel ledit circuit de lecture (RD) est configuré pour générer une première tension de commande (CGV1) inférieure à la troisième tension de seuil initiale (VG) et une deuxième tension de commande (CGV2) supérieure à la troisième tension de seuil initiale (VG).

18. Circuit intégré selon l'une des revendications 12 ou 13, dans lequel ledit au moins un transistor d'état (FGT) est soit effacé pour avoir une première tension de seuil initiale (ER), soit programmé pour avoir une deuxième tension de seuil initiale (PG).

19. Circuit intégré selon la revendication 18 prise en combinaison avec la revendication 13, dans lequel le circuit de lecture (RD) est configuré pour générer au moins une tension de commande comprenant soit une première tension de commande (CGV1) inférieure à la première tension de seuil initiale (ER) et une deuxième tension de commande (CGV2) supérieure à la première tension de seuil initiale (ER), soit une troisième tension de commande (CGV1) inférieure à la deuxième tension de seuil initiale (PG) et une quatrième tension de commande (CGV2) supérieure à la deuxième tension de seuil initiale (PG).

20. Circuit intégré selon l'une des revendications 12 à 19 prise en combinaison avec la revendication 13, dans lequel le circuit de lecture (RD) est configuré pour générer chaque tension de commande (CGV, CGV1, CGV2) en outre différente d'une tension de seuil (VG) d'un transistor d'état ayant une configuration vierge.

21. Circuit intégré selon l'une des revendications 12 à 20 prise en combinaison avec la revendication 13, dans lequel un élément capacitif (CFC) est en outre couplé entre la grille flottante (FG) et la grille de commande (CG) dudit au moins un transistor d'état (FGT).

22. Circuit intégré selon l'une des revendications 12 à 21, dans lequel ledit au moins un corps électriquement conducteur (MPL) comprend au moins une plaque métallique (MPL1, MPL2) située dans des niveaux d'interconnexion du circuit intégré (CI).

23. Circuit intégré selon l'une des revendications 12 à 22, dans lequel ledit au moins un corps électriquement conducteur (MPL) comprend au moins une tranchée remplie d'un matériau conducteur (PTR) s'étendant verticalement en profondeur dans un substrat semiconducteur (PSUB) du circuit intégré (CI).

## Patentansprüche

1. Verfahren zur Erkennung eines Angriffs auf einen integrierten Schaltkreis (CI) durch einen Strahl von elektrisch geladenen Teilchen (IB), umfassend:
- eine Umsetzung mindestens eines elektrisch leitenden Körpers (MPL) und mindestens eines Zustandstransistors mit einem schwebenden Gate (FG), das mit jeweils dem mindestens einen elektrisch leitenden Körper (MPL) elektrisch gekoppelt ist, in dem integrierten Schaltkreis;
- eine Konfiguration des mindestens einen Zustandstransistors (FGT), um diesem eine jeweilige anfängliche Schwellenspannung zu verleihen; und
- eine Erkennung des Angriffs durch eine Erkennung einer Schwellenspannung des mindestens einen Zustandstransistors (FGT), die sich von der anfänglichen Schwellenspannung unterscheidet.

2. Verfahren nach Anspruch 1, wobei der Zustandstransistor (FGT) ein Steuer-Gate (CG) umfasst und die Erkennung der Schwellenspannung, die sich von der anfänglichen Schwellenspannung unterscheidet, eine Erzeugung mindestens einer Steuerspannung (CGV) auf dem Steuer-Gate (CG), die sich von der anfänglichen Schwellenspannung unterscheidet, und eine Bestimmung (RD) eines durchgeschalteten oder gesperrten Zustands des mindestens einen Zustandstransistors (FGT) für jede Steuerspannung (CGV) umfasst.

3. Verfahren nach einem der Ansprüche 1 oder 2, wobei die Umsetzung eine Umsetzung eines ersten Zustandstransistors (FGT1) und eines zweiten Zustandstransistors (FGT2) umfasst; wobei die Konfiguration eine Löschung des ersten Zustandstransistors (FGT1), um diesem eine erste anfängliche Schwellenspannung (ER) zu verleihen, und eine Programmierung des zweiten Zustandstransistors (FGT2), um diesem eine zweite anfängliche Schwellenspannung (PG) zu verleihen, umfasst und die Erkennung eine Erkennung einer Modifikation der Schwellenspannung von einem der zwei Zustandstransistoren in Bezug auf seine entsprechende anfängliche Schwellenspannung umfasst.

4. Verfahren nach einem der Ansprüche 2 und 3, wobei die Erkennung eine Anwendung einer Steuerspannung (CGV), die zwischen der ersten anfänglichen Schwellenspannung (ER) und der zweiten anfänglichen Schwellenspannung (PG) liegt, auf jeden Zustandstransistor umfasst.

5. Verfahren nach einem der Ansprüche 1 oder 2, wobei die Konfiguration einen Anschluss des mindestens einen Körpers (MPL) an ein Massepotential mittels eines Verbindungselements (LI) während der Umsetzung des integrierten Schaltkreises (CI) und dann eine Trennung des Verbindungselements (LI), um dem mindestens einen Zustandstransistor (FGT) eine dritte anfängliche Schwellenspannung (VG) zu verleihen, die einer Leerkonfiguration dieses Zustandstransistors entspricht, umfasst.

6. Verfahren nach Anspruch 5 in Kombination mit Anspruch 2, wobei die Erkennung eine Anwendung einer ersten Steuerspannung (CGV1), die niedriger als die dritte anfängliche Schwellenspannung (VG) des Transistors ist, und einer zweiten Steuerspannung (CGV2), die höher als die dritte anfängliche Schwellenspannung (VG) des Transistors ist, umfasst.

7. Verfahren nach einem der Ansprüche 1 oder 2, wobei die Konfiguration eine Löschung oder eine Programmierung des mindestens einen Zustandstransistors (FGT), um diesem entweder eine erste anfängliche Schwellenspannung (ER), die der Löschung entspricht, oder eine zweite anfängliche Schwellenspannung (PG), die der Programmierung entspricht, zu verleihen, umfasst.

8. Verfahren nach Anspruch 7 in Kombination mit Anspruch 2, wobei die Erkennung entweder eine Anwendung einer ersten Steuerspannung (CGV1), die niedriger als die erste anfängliche Schwellenspannung (ER) ist, und einer zweiten Steuerspannung (CGV2), die höher als die erste anfängliche Schwellenspannung (PG) ist, oder eine Anwendung einer dritten Steuerspannung (CGV1), die niedriger als die zweite anfängliche Schwellenspannung (ER) ist, und einer vierten Steuerspannung (CGV2), die höher als die zweite anfängliche Schwellenspannung (PG) ist, umfasst.

9. Verfahren nach einem der vorhergehenden Ansprüche in Kombination mit Anspruch 2, wobei jede Steuerspannung (CGV, CGV1, CGV2) weiterhin sich von einer Schwellenspannung (VG) eines Zustandstransistors mit einer Leerkonfiguration unterscheidet.

10. Verfahren nach einem der Ansprüche 1 bis 9, wobei die Umsetzung mindestens eines elektrisch leitenden Körpers (MPL) in dem integrierten Schaltkreis eine Umsetzung mindestens einer Metallplatte (MPL1, MPL2) umfasst, die sich in Verdrahtungsebenen des integrierten Schaltkreises (CI) befindet.

11. Verfahren nach einem der Ansprüche 1 bis 10, wobei die Umsetzung mindestens eines elektrisch leitenden Körpers (MPL) in dem integrierten Schaltkreis eine Umsetzung mindestens eines Grabens umfasst, der mit einem leitenden Material (PTR) gefüllt ist und sich vertikal tief in einem Halbleitersubstrat (PSUB) des integrierten Schaltkreises (CI) erstreckt.

12. Integrierter Schaltkreis, umfassend eine Vorrichtung (DIS) zur Erkennung eines Angriffs durch einen Strahl von elektrisch geladenen Teilchen (IB), umfassend:
- mindestens einen elektrisch leitenden Körper (MPL) und mindestens einen Zustandstransistor (FGT) mit einem schwebenden Gate (FG), das mit jeweils dem mindestens einen elektrisch leitenden Körper (MPL) elektrisch gekoppelt ist, wobei der mindestens eine Zustandstransistor (FGT) dazu konfiguriert ist, eine jeweilige anfängliche Schwellenspannung aufzuweisen; und
- ein Erkennungsmittel (MD), das dazu konfiguriert ist, den Angriff durch eine Erkennung einer Schwellenspannung des mindestens einen Zustandstransistors (FGT), die sich von der anfänglichen Schwellenspannung unterscheidet, zu erkennen.

13. Integrierter Schaltkreis nach Anspruch 12, wobei der Zustandstransistor (FGT) ein Steuer-Gate (CG) umfasst und das Erkennungsmittel (MD) einen Leseschaltkreis (RD) umfasst, der dazu konfiguriert ist, mindestens eine Steuerspannung (CGV) auf dem Steuer-Gate (CG) des Zustandstransistors (FGT), die sich von der anfänglichen Schwellenspannung unterscheidet, zu erzeugen und für jede Steuerspannung (CGV) einen durchgeschalteten oder gesperrten Zustand des mindestens einen Zustandstransistors (FGT) zu bestimmen.

14. Integrierter Schaltkreis nach einem der Ansprüche 12 oder 13, wobei der mindestens eine Zustandstransistor einen ersten, gelöschten Zustandstransistor (FGT1), um eine erste anfängliche Schwellenspannung (ER) aufzuweisen, und einen zweiten, programmierten Zustandstransistor (FGT2), um eine zweite anfängliche Schwellenspannung (PG) aufzuweisen, umfasst und das Erkennungsmittel (MD) dazu konfiguriert ist, eine Modifikation der Schwellenspannung von einem der zwei Zustandstransistoren (FGT1, FGT2) in Bezug auf seine entsprechende anfängliche Schwellenspannung (ER, PG) zu erkennen.

15. Integrierter Schaltkreis nach einem der Ansprüche 13 und 14, wobei der Leseschaltkreis (RD) dazu konfiguriert ist, eine Steuerspannung (CGV) für jeden Zustandstransistor (FGT1, FGT2) zu erzeugen, die zwischen der ersten anfänglichen Schwellenspannung (ER) und der zweiten anfänglichen Schwellenspannung (PG) liegt.

16. Integrierter Schaltkreis nach einem der Ansprüche 12 oder 13, wobei der mindestens eine Zustandstransistor (FGT) dazu konfiguriert ist, eine dritte anfängliche Schwellenspannung (VG) aufzuweisen, die einer Leerkonfiguration dieses Zustandstransistors entspricht.

17. Integrierter Schaltkreis nach Anspruch 16 in Kombination mit Anspruch 13, wobei der Leseschaltkreis (RD) dazu konfiguriert ist, eine erste Steuerspannung (CGV1), die niedriger als die dritte anfängliche Schwellenspannung (VG) ist, und eine zweite Steuerspannung (CGV2), die höher als die dritte anfängliche Schwellenspannung (VG) ist, zu erzeugen.

18. Integrierter Schaltkreis nach einem der Ansprüche 12 oder 13, wobei der mindestens eine Zustandstransistor (FGT) entweder gelöscht wird, um eine erste anfängliche Schwellenspannung (ER) aufzuweisen, oder programmiert wird, um eine zweite anfängliche Schwellenspannung (PG) aufzuweisen.

19. Integrierter Schaltkreis nach Anspruch 18 in Kombination mit Anspruch 13, wobei der Leseschaltkreis (RD) dazu konfiguriert ist, mindestens eine Steuerspannung zu erzeugen, umfassend entweder eine erste Steuerspannung (CGV1), die niedriger als die erste anfängliche Schwellenspannung (ER) ist, und eine zweite Steuerspannung (CGV2), die höher als die erste anfängliche Schwellenspannung (ER) ist, oder eine dritte Steuerspannung (CGV1), die niedriger als die zweite anfängliche Schwellenspannung (PG) ist, und eine vierte Steuerspannung (CGV2), die höher als die zweite anfängliche Schwellenspannung (PG) ist.

20. Integrierter Schaltkreis nach einem der Ansprüche 12 bis 19 in Kombination mit Anspruch 13, wobei der Leseschaltkreis (RD) dazu konfiguriert ist, jede Steuerspannung (CGV, CGV1, CGV2) zu erzeugen, die weiterhin sich von einer Schwellenspannung (VG) eines Zustandstransistors mit einer Leerkonfiguration unterscheidet.

21. Integrierter Schaltkreis nach einem der Ansprüche 12 bis 20 in Kombination mit Anspruch 13, wobei ein kapazitives Element (CFC) weiterhin zwischen dem schwebenden Gate (FG) und dem Steuer-Gate (CG) des mindestens einen Zustandstransistors (FGT) gekoppelt ist.

22. Integrierter Schaltkreis nach einem der Ansprüche 12 bis 21, wobei der mindestens eine elektrisch leitende Körper (MPL) mindestens eine Metallplatte (MPL1, MPL2) umfasst, die sich in Verdrahtungsebenen des integrierten Schaltkreises (CI) befindet.

23. Integrierter Schaltkreis nach einem der Ansprüche 12 bis 22, wobei der mindestens eine elektrisch leitende Körper (MPL) mindestens einen Graben umfasst, der mit einem leitenden Material (PTR) gefüllt ist und sich vertikal tief in einem Halbleitersubstrat (PSUB) des integrierten Schaltkreises (CI) erstreckt.

## Claims

1. A method for detecting an attack of an integrated circuit (CI) by a beam of electrically charged particles (IB), comprising
- a production, in the integrated circuit, of at least one electrically conductive body (MPL) and at least one state transistor having a floating gate (FG) which is electrically coupled with respectively said at least one electrically conductive body (MPL);
- a configuration of said at least one state transistor (FGT) so as to give it a respective initial threshold voltage; and
- a detection of said attack by a detection of a threshold voltage of said at least one state transistor (FGT) which is different from the initial threshold voltage.

2. The method according to claim 1, wherein the state transistor (FGT) comprises a control gate (CG) and the detection of the threshold voltage which is different from the initial threshold voltage comprises a generation of at least one control voltage (CGV) on the control gate (CG) which is different from said initial threshold voltage, and a determination (RD), for each control voltage (CGV), of an on or off state of said at least one state transistor (FGT).

3. The method according to one of claims 1 or 2, wherein said production comprises a production of a first state transistor (FGT1) and a second state transistor (FGT2); said configuration comprises erasing the first state transistor (FGT1) so as to give it a first initial threshold voltage (ER), and programming the second state transistor (FGT2) so as to give it a second initial threshold voltage (PG) and said detection comprises a detection of a change in the threshold voltage of one of the two state transistors relative to the corresponding initial threshold voltage thereof.

4. The method according to claims 2 and 3, wherein said detection comprises an application to each state transistor of a control voltage (CGV) located between the first initial threshold voltage (ER) and the second initial threshold voltage (PG).

5. The method according to one of claims 1 or 2, wherein said configuration comprises a setting to a ground potential of said at least one body (MPL) via a connecting element (LI) during the production of the integrated circuit (CI), then a sectioning of the connecting element (LI), so as to give said at least one state transistor (FGT) a third initial threshold voltage (VG) corresponding to a blank configuration of this state transistor.

6. The method according to claim 5 taken in combination with claim 2, wherein said detection comprises an application of a first control voltage (CGV1) which is lower than the third initial threshold voltage (VG) of the transistor, and a second control voltage (CGV2) which is higher than the third initial threshold voltage (VG) of the transistor.

7. The method according to one of claims 1 or 2, wherein said configuration comprises erasing or programming said at least one state transistor (FGT) so as to give it either a first initial threshold voltage (ER) corresponding to said erasing, or a second initial threshold voltage (PG) corresponding to said programming.

8. The method according to claim 7 taken in combination with claim 2, wherein said detection comprises either an application of a first control voltage (CGV1) which is lower than the first initial threshold voltage (ER) and of a second control voltage (CGV2) which is higher than the first initial threshold voltage (PG), or an application of a third control voltage (CGV1) which is lower than the second initial threshold voltage (ER) and of a fourth control voltage (CGV2) which is higher than the second initial threshold voltage (PG).

9. The method according to one of the preceding claims taken in combination with claim 2, wherein each control voltage (CGV, CGV1, CGV2) is further different from a threshold voltage (VG) of a state transistor having a blank configuration.

10. The method according to one of claims 1 to 9, wherein said production in the integrated circuit of at least one electrically conductive body (MPL) comprises a production of at least one metal plate (MPL1, MPL2) located in interconnection levels of the integrated circuit (CI).

11. The method according to one of claims 1 to 10, wherein said production in the integrated circuit of at least one electrically conductive body (MPL) comprises a production of at least one trench filled with a conductive material (PTR) extending vertically in depth in a semiconductor substrate (PSUB) of the integrated circuit (CI).

12. An integrated circuit including a device (DIS) for detecting an attack by a beam of electrically charged particles (IB), comprising
- at least one electrically conductive body (MPL) and at least one state transistor (FGT) having a floating gate (FG) which is electrically coupled with respectively said at least one electrically conductive body (MPL), said at least one state transistor (FGT) being configured to have a respective initial threshold voltage; and
- detection means (MD) configured to detect said attack by detecting a threshold voltage of said at least one state transistor (FGT) which is different from the initial threshold voltage.

13. The integrated circuit according to claim 12, wherein the state transistor (FGT) includes a control gate (CG), and the detection means (MD) comprises a read circuit (RD) configured to generate at least one control voltage (CGV) on the control gate (CG) of said state transistor (FGT) which is different from said initial threshold voltage, and, for each control voltage (CGV), determine an on or off state of said at least one state transistor (FGT).

14. The integrated circuit according to one of claims 12 or 13, wherein said at least one state transistor comprises a first state transistor (FGT1) erased to have a first initial threshold voltage (ER) and a second programmed state transistor (FGT2) to have a second initial threshold voltage (PG), and said detection means (MD) is configured to detect a change in the threshold voltage of one of the two state transistors (FGT1, FGT2) relative to the corresponding initial threshold voltage (ER, PG) thereof.

15. The integrated circuit according to claims 13 and 14, wherein the read circuit (RD) is configured to generate a control voltage (CGV) on each state transistor (FGT1, FGT2), located between the first initial threshold voltage (ER) and the second initial threshold voltage (PG).

16. The integrated circuit according to one of claims 12 or 13, wherein said at least one state transistor (FGT) is configured to have a third initial threshold voltage (VG) corresponding to a blank configuration of this state transistor.

17. The integrated circuit according to claim 16 taken in combination with claim 13, wherein said read circuit (RD) is configured to generate a first control voltage (CGV1) which is lower than the third initial threshold voltage (VG) and a second control voltage (CGV2) which is higher than the third initial threshold voltage (VG).

18. The integrated circuit according to one of claims 12 or 13, wherein said at least one state transistor (FGT) is either erased to have a first initial threshold voltage (ER), or programmed to have a second initial threshold voltage (PG).

19. The integrated circuit according to claim 18 taken in combination with claim 13, wherein the read circuit (RD) is configured to generate at least one control voltage comprising either a first control voltage (CGV1) which is lower than the first initial threshold voltage (ER) and a second control voltage (CGV2) which is higher than the first initial threshold voltage (ER), or a third control voltage (CGV1) which is lower than the second initial threshold voltage (PG) and a fourth control voltage (CGV2) which is higher than the second initial threshold voltage (PG) .

20. The integrated circuit according to one of claims 12 to 19 taken in combination with claim 13, wherein the read circuit (RD) is configured to generate each control voltage (CGV, CGV1, CGV2) which is further different from a threshold voltage (VG) of a state transistor having a blank configuration.

21. The integrated circuit according to one of claims 12 to 20 taken in combination with claim 13, wherein a capacitive element (CFC) is further coupled between the floating gate (FG) and the control gate (CG) of said at least one state transistor (FGT).

22. The integrated circuit according to one of claims 12 to 21, wherein said at least one electrically conductive body (MPL) comprises at least one metal plate (MPL1, MPL2) located in interconnection levels of the integrated circuit (CI).

23. The integrated circuit according to one of claims 12 to 22, wherein said at least one electrically conductive body (MPL) comprises at least one trench filled with a conductive material (PTR) extending vertically in depth in a semiconductor substrate (PSUB) of the integrated circuit (CI) .
